(19) Europäisches Patentamt
European Patent Office
Office européen des brevets

(11) Publication number: **0 082 603**
**A2**

# (12) EUROPEAN PATENT APPLICATION

(21) Application number: 82306283.1

(22) Date of filing: 25.11.82

(51) Int. Cl.³: C 09 D 3/58
C 09 D 3/80, C 08 F 283/10

(30) Priority: 22.12.81 US 333367

(43) Date of publication of application:
29.06.83 Bulletin 83/26

(84) Designated Contracting States:
BE DE FR GB IT NL

(71) Applicant: MOBIL OIL CORPORATION
150 East 42nd Street
New York New York 10017(US)

(72) Inventor: Nagy, Frank Andrew
Rd 5, Box 126 Old Clinton Road
Flemington New Jersey 08822(US)

(74) Representative: West, Alan Harry et al,
Mobil Court 3 Clements Inn
London WC2A 2EB(GB)

(54) **Radiation curable epoxy/acrylate-hydroxyl coating compositions.**

(57) The invention provides coating compositions comprising an epoxy resin, an acrylic or methacrylic monomer containing hydroxyl functionality, and a radiation sensitive Group VIa onium salt. It also provides substrates coated with such coating compositions and irradiated.

EP 0 082 603 A2

# RADIATION CURABLE EPOXY/ACRYLATE-HYDROXYL COATING COMPOSITIONS

This invention relates to epoxy resin-acrylic monomer coating compositions that are curable with radiation.

In U.S. Patent 4,156,035, there are disclosed mixtures of epoxy resins with acrylic or methacrylic monomers that can be photocured in air in thick sections using as curing agent a combination of a Group VIa onium salt and a free radical photoinitiator, such as a benzoin ether. That patent states that epoxy resins are known to cure cationically by radiation catalyzed by Group VIa onium salts, although such cure can only be effected in thin (0.025 mm) films; thicker films require extremely long cure times to achieve thorough cure. That patent states also that acrylic and methacrylic compounds cannot be cured cationically by radiation, but require free radical photoinitiators, and that acrylic or methacrylic compounds can be photolytically cured in thick sections, but are subject to air inhibition at the surface, resulting in tackiness on the surface. Consequently, an inert atmosphere is preferred to obtain tack-free films.

The present invention is based on the observation that mixtures of epoxy resin and acrylic or methacrylic monomers can be cured by UV or ionizing radiation tack-free in thick or thin films in air or an inert atmosphere, provided that the acrylic or methacrylic monomer also contains hydroxyl functionality. Such cure is effected cationically using a Group VIa onium salt without a free radical initiator.

Accordingly, the present invention provides a coating composition comprising an epoxy resin, an acrylic or methacrylic monomer containing hydroxyl functionality, and a radiation sensitive Group VIa onium salt. It also provides substrates coated with such coating compositions and cured.

The epoxy resins used in the coating compositions of the invention are compounds having more than one alpha-epoxy group,

whether situated internally, terminally, or on a cyclic structure. They can be derived from various polyunsaturated structures, including animal and vegetable oils, esters, ethers, and butadiene derivatives. A large number of such epoxy resins and methods for preparing them are described in Chapters 2 and 3 of "Handbook of Epoxy Resins" by Lee and Neville, McGraw-Hill Book Company, New York (1967); commercially available resins are described in Appendix 4-2 of that publication.

Particularly useful and readily commercially available epoxy resins are the diglycidyl ethers of bisphenols, for example the diglycidyl ethers of bisphenol A. Another useful class of epoxy resins is the epoxidized esters, for example 3,4-epoxycyclohexylmethyl-3,4-epoxycyclohexane carboxylate; 3,4-epoxy-6-methylcyclohexylmethyl-3,4-epoxy- 6-methylcyclohexane carboxylate; and bis(3,4-epoxy-6- methylcyclohexylmethyl)adipate. Any of these epoxy resins may be used in the compositions of the invention, either alone or in combination with any one or more other epoxy resins. The epoxy resins used in the compositions of the invention preferably have an epoxy equivalent weight from about 100 to about 1000.

Another type of epoxy resin that may be used is a diglycidyl ether of bisphenol A etherified with a stoichiometric amount of hydroxyethyl acrylate or methacrylate. The conditions required for carrying out such an etherification reaction are described in U.S. Patent 4,064,026.

The second component of the compositions of the invention, the acrylic or methacrylic compound having hydroxyl functionality, may be a hydroxyalkyl ester, for example hydroxyethyl acrylate, hydroxyethyl methacrylate, hydroxypropyl acrylate and hydroxypropyl methacrylate. Another class of hydroxyl functional acrylic and methacrylic compounds is that having the general formula

$$CH_2 = C(R)OOCH_2CH(OH)CH_2OR'$$

in which R is H or $CH_3$ and R' is $C_1$-$C_4$ alkyl, phenyl, or cresyl. Compounds of this class are readily prepared by the well

known addition esterification reaction of acrylic or methacrylic acid with an alkyl, phenyl, or cresyl glycidylether, for example butyl glycidyl ether.

A further class of compounds is that having the general formula

$$CH_2 = C(R)OOR''O\ (\underset{\displaystyle R'''}{CH}CH_2O)_xH$$

in which R is H or $CH_3$, R" is $C_1$ - $C_4$ alkylene, R''' is H or $C_1$ - $C_3$ alkyl, and <u>x</u> is an integer from 1 to 10. Generally, these compounds can be prepared by reacting a hydroxyalkyl acrylate or methacrylate with an alkylene oxide (1,2-epoxyalkane), for example ethylene oxide, 1,2-epoxypropane and 1,2-epoxybutane, using a molar ratio of (meth)acrylate to alkylene oxide of 1:1 to about 1:10, at about 30 to 75°C, and using an initiator such as borontrifluoride etherate. In the specific case in which the alkylene group is ethylene and R''' is H, the (meth)acrylate can be prepared by the monoesterification of a poly(oxyethylene) glycol (for example, that commercially available under the registered trademark Carbowax) with (meth)acrylic acid or (meth)acryloyl chloride. Examples of compounds of these classes include butoxy-2-hydroxypropyl acrylate, phenoxy-2-hydroxypropyl acrylate, cresoxy-2-hydroxypropyl acrylate, hydroxy penta(oxypropyl) ether of ethyl acrylate, hydroxy deca(oxyethylene) ether of butyl acrylate, hydroxy hexa(oxybutylene) ether of propyl acrylate and the corresponding methacrylates.

The Group VIa onium salts used in the coating compositions of the invention are those described in U.S. Patent 4,058,401, that is to say compounds of the general formula:

$$\left[(R)_a(R^1)_b(R^2)_cX\right]^+_d \left[MQ_e\right]^{-(e-f)}$$

in which R is a monovalent aromatic group, $R^1$ is a monovalent

aliphatic group selected from alkyl, cycloalkyl and substituted alkyl groups; $R^2$ is a polyvalent organic group forming a heterocyclic or fused ring structure selected from aliphatic and aromatic groups; X is a Group VIa element selected from sulfur, selenium and tellurium; M is a metal or metalloid, Q is a halogen; a is zero or an integer from 1 to 3; b is zero, 1 or 2; c is zero or 1; the sum of a, b and c is 3 or has the value of the valence of X; d = e - f; f has the value of the valence of M and is an integer from 2 to 7; and e > f and is an integer up to 8.

Groups R are, for example, $C_{(6-13)}$ aromatic hydrocarbon groups such as phenyl, tolyl, napthyl and anthryl, and such radicals substituted with from 1 to 4 monovalent groups such as $C_{(1-8)}$ alkoxy, $C_{(1-8)}$ alkyl, nitro, chloro and hydroxy; arylacyl groups such as benzoyl, phenylacyl; and aromatic heterocyclic groups such as pyridyl and furfuryl. Groups $R^1$ include $C_{(1-8)}$ alkyl, such as methyl and ethyl; and substituted alkyl such as $-C_2H_4OCH_3$, $-CH_2COOC_2H_5$ and $-CH_2COCH_3$. Groups $R^2$ include such structures as:

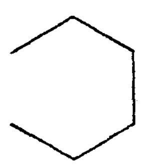 ;

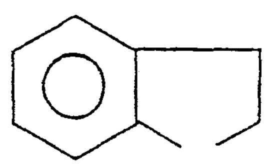 ;

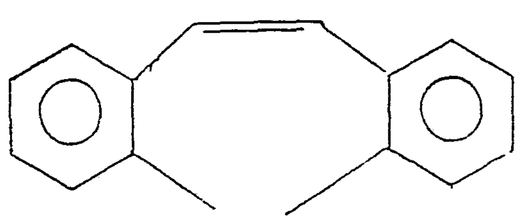 ;

and

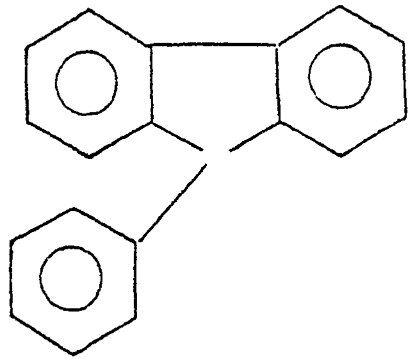

Examples of M are transition metals such as Sb, Fe, Sn, Bi, Al, Ga, In, Ti, Zr, Sc, V, Cr, Mn and Cs; rare earth metals such as the lanthanides, for example, Ce, Pr and Nd, and the actinides, such as Th, Pa, U and Np; and metalloids such as B, P and As.

Complex anions included by $[MQ]^{-(e-f)}$ are, for example, $BF_4^-$, $PF_6^-$, $AsF_3^-$, $SbF_6^-$, $FeCl_4^-$, $SnCl_6^-$, $SbCl_6$, $BiCl_5^{2-}$, $AlF_6^{3-}$, $GaCl_4^-$, $InF_4^-$, $TiF_6^{2-}$ and $ZrF_6^-$.

The compositions according to the invention suitably contain, on a weight basis, from 1 to 99%, preferably from 30 to 75%, epoxy resin; from 99 to 1%, preferably from 70 to 20%, OH-containing (meth)acrylic compound; and from 0.1 to 10%, preferably from 1 to 10%, Group VIa onium salt. The amounts of epoxy resin and OH-containing (meth)acrylic compound are suitably such that the epoxy/OH ratio is from 0.1 to 100, preferably from 1 to 10.

The coating compositions of the invention may be applied to a wide variety of substrates, for example metal, paper, leather and cloth, using any of the usual methods of application, including wiping, spraying and rollcoat application. Suitable metallic substrates include aluminum, steel, and tin-plated steel. The compositions are generally applied at a rate of about 1.5 to 35 $g/m^2$. After application, the coating may be cured by exposure to radiation for between about 0.01 second and about 30 seconds. In some cases, the coating will be cured by short exposure to radiation, for example less than one second, which is sufficient to set the film so that it will accept inks and/or wet-ink varnishes. Following the printing or

varnishing operation, these coating may be further cured by baking at about 120°C to 240°C for between about 3 seconds and about 5 minutes.

Suitable sources of radiation are ultraviolet light and electron beam radiation. Preferably, an ultraviolet light of a wavelength below 4000 Angstrom Units is used. The electron beam radiation may be obtained from high energy electrons produced by high voltage electron accelerators, resonant transformers, transformer rectifiers, micro-wave waveguide linear accelerator, and synchrotrons.

The following Examples illustrate the invention.

In the Examples, FC-508 is a Group VIa onium salt available from the 3M Company and believed to be triphenylsulfonium hexafluorophosphate; ERL-4221 is 3,4-epoxycyclo- hexylmethyl-3,4-epoxycyclohexane carboxylate (from Union Carbide) and has an epoxy equivalent weight of 133; Epon 828 (from Shell Chemical Company) is a diglycidyl ether of bisphenol A having an epoxy equivalent weight of 185 - 192; Epon 828 $(HEA)_2$ is Epon 828 etherified stoichiometrically with hydroxyethyl acrylate; HEA.5PO is hydroxyethyl acrylate adducted with five units of propylene oxide; 2 EHA is 2-ethylhexyl acrylate; and Butyl Cello is 2-butoxyethanol.

In the cure cycles, under UV cure, % Conversion PB is the percent conversion of a 0.005 mm film of a coating on aluminum subjected to UV light at a rate of 7.6 m per minute/lamp and post-baked at 175°C. for 5 minutes and, under EB cure, % Conversion PB is the percent cure of a 0.005 mm film of a coating on aluminum subjected to 35 kGy dosage of radiation from an electron beam and post-baked at 175°C. for 5 minutes.

Thicker films were obtained by coating an oily steel test panel with a coating and if the film cured, it was stripped from the panel and subjected to standard tensile testing for percent elongation and for break strength (kPa). Under UV Cure, % E/BS is the percent elongation and break strength of a 0.076 mm film if it cured under UV light at a rate of 7.6 m per minute/lamp and aged 24 hours at room temperature. Under EB Cure, % E/BS are the same data for a 0.076 mm film, if it cured when exposed to 50 kGy of radiation from an electron beam and aged 24 hours at room temperature.

Examples 1 to 11

A series of coating blends containing Group VIa onium salt catalyst were prepared. Examples 1, 2, and 3 contained epoxy resin. Examples 4, 5, 6, and 9 contained epoxy resin and hydroxyl-functional acrylic according to the invention. The remaining examples contained epoxy resin, but not hydroxy functional acrylic. Each composition was coated as thin and thick films on a test panel and irradiated, as described above. UV cure was in air. EB cure was in an inert ($N_2$) atmosphere, but cured as well in air. Data and results are set forth in the following Table.

TABLE

| Example | 1 | 2 | 3 | 4 | 5 | 6 | 7 | 8 | 9 | 10 | 11 |
|---|---|---|---|---|---|---|---|---|---|---|---|
| FC-508 | 5.0 | 5.0 | 5.0 | 5.0 | 5.0 | 4.5 | 4.5 | 4.5 | 4.5 | 4.5 | 4.5 |
| ERL-4221 | 94.5 | - | 45.0 | - | 48.0 | 50.0 | 50.0 | 50.0 | - | - | - |
| Epon 828 | - | 94.5 | 49.0 | 48.0 | - | - | - | - | 50.0 | 50.0 | 50.0 |
| Epon 828 $(HEA)_2$ | - | - | - | 23.3 | 23.3 | - | - | - | - | - | - |
| HEA·5PO | - | - | - | 23.3 | 23.3 | 45.0 | - | - | 45.0 | - | - |
| 2EHA | - | - | - | - | - | - | 45.0 | - | - | 45.0 | - |
| Butyl Cello. | - | - | - | - | - | - | - | 45.0 | - | - | 45.0 |
| Epoxy/OH ratio | NA | NA | NA | 4.6 | 6.0 | 3.3 | NA | 1.1 | 2.3 | NA | 1.0 |
| UV Cure | | | | | | | | | | | |
| % Conversion PB | 92 | 97 | 95 | 97 | 96 | 89 | 55 | 69 | 90 | 60 | 65 |
| % E/BS | DNC | DNC | DNC | 32/15170 | 10/1380 | 40/6205 | DNC | DNC | 10/2760 | DNC | DNC |
| EB Cure | | | | | | | | | | | |
| % Conversion PB | 84 | 94 | 80 | 93 | 80 | 83 | 52 | 52 | 82 | 57 | 52 |
| % E/BS | DNC | DNC | DNC | 45/8270 | 28/4140 | 44/6690 | DNC | DNC | 50/3030 | DNC | DNC |

DNC = Did not cure

From the data in the Table, it will be apparent that blends containing both epoxy resin and hydroxyl functional acrylic (Examples 4, 5, 6, and 9) cured well as both thick and thin films. Blends containing epoxy resin only (Examples 1, 2, and 3) cured well as thin films, but did not cure as thick films. Blends containing epoxy resin and acrylic only (Examples 7 and 10) or hydroxyl functional compounds only (Examples 8 and 11) cured relatively poorly as thin films and did not cure as thick films.

CLAIMS:

1. A coating composition comprising at least one epoxy resin, an acrylic or methyacrylic monomer containing hydroxyl functionality, and a radiation sensitive Group VIa onium salt.

2. A coating composition according to claim 1, containing, by weight of the total composition, from 1 to 99 percent epoxy resin, from 99 percent to 1 percent hydroxyl functional acrylic or methyacrylic monomer, and from 0.1 to 10 percent Group VIa onium salt.

3. A coating composition according to claim 1, containing, by weight of the total composition, from 30 to 75 percent epoxy resin, from 70 to 20 percent hydroxyl functional acrylic or methacrylic monomer, and from 1 to 10 percent Group VIa onium salt.

4. A coating composition according to any one of claims 1 to 3, wherein the epoxy resin is a mixture of a diglycidyl ether of bisphenol A having an epoxy equivalent weight of 185 to 192 and a diglycidyl ether of bisphenol A having an epoxy equivalent weight of 185-192 etherified stoichiometrically with hydroxyethyl acrylate, and the hydroxyl functional acrylic monomer is hydroxyethyl acrylate adducted with five units of propylene oxide.

5. A coating composition according to any one of claims 1 to 3, wherein the epoxy resin is a diglycidyl ether of bisphenol A having an epoxy equivalent weight of 185 to 192 etherified stoichiometrically with hydroxyethyl acrylate, and the hydroxyl functional acrylic monomer is hydroxyethyl acrylate adducted with five units of propylene oxide.

6. A coating composition according to any one of claims 1 to 3, wherein the epoxy resin is 3,4-epoxycyclohexylmethyl-3,4-epoxycyclohexane carboxylate, and the hydroxyl functional acrylic monomer is hydroxyethyl acrylate adducted with five units of propylene oxide.

7. A coating composition according to any one of claims 1 to 3, wherein the epoxy resin is a diglycidyl ether of bisphenol A having an epoxy equivalent weight of 185 to 192, and the hydroxyl functional acrylic monomer is hydroxyethyl acrylate adducted with five units of propylene oxide.

8. A substrate coated with a coating composition according to any one of claims 1 to 7 and cured by radiation.

9. A coated substrate according to claim 8, wherein the substrate is a metal substrate.

10. A coated substrate according to claim 9, wherein the metal is aluminum.

9063N/0426N